(19) Europäisches Patentamt / European Patent Office / Office européen des brevets

(11) **EP 4 500 485 B1**

(12) **EUROPEAN PATENT SPECIFICATION**

(45) Date of publication and mention of the grant of the patent:
**02.09.2026 Bulletin 2026/36**

(21) Application number: **23715484.4**

(22) Date of filing: **27.03.2023**

(51) International Patent Classification (IPC):
***G06V 10/82*** *(2022.01)* ***G06V 10/80*** *(2022.01)*
***G06V 10/20*** *(2022.01)*

(52) Cooperative Patent Classification (CPC):
**G06V 10/82; G06V 10/255; G06V 10/806**

(86) International application number:
**PCT/EP2023/057766**

(87) International publication number:
**WO 2023/186767 (05.10.2023 Gazette 2023/40)**

(54) **APPARATUS FOR SOFT ATTENTION BASED SALIENCY MAP GENERATION FOR OBJECT DETECTION AND METHOD THEREOF**

VORRICHTUNG ZUR AUF WEICHER AUFMERKSAMKEIT BASIERENDEN SALIZENZKARTENERZEUGUNG ZUR OBJEKTERKENNUNG UND VERFAHREN DAFÜR

APPAREIL DE GÉNÉRATION DE CARTE DE SAILLANCE BASÉE SUR L'ATTENTION DOUCE POUR LA DÉTECTION D'OBJET, ET PROCÉDÉ ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2022 IN 202241018805**

(43) Date of publication of application:
**05.02.2025 Bulletin 2025/06**

(73) Proprietors:
- **AUMOVIO Autonomous Mobility Germany GmbH**
**85057 Ingolstadt (DE)**
- **Indian Institute Of Technology Madras**
**Chennai, Tamil Nadu 600036 (IN)**

(72) Inventors:
- **KUMAR, Jitendra**
**Bangalore 560099 (IN)**
- **CHAKRAVATHY, Srinivasa**
**Chennai-600036, Tamil Nadu (IN)**
- **SHIVAPURAM, Bharath**
**Bangalore 560099 (SG)**
- **PRASAD, Devadatta**
**Bangalore 560100 (IN)**
- **MEGHWANI, Hansa**
**Bangalore 560099 (SG)**
- **KUMARI, Sweta Soni**
**Chennai-600036, Tamil Nadu (IN)**

(74) Representative: **Aumovio Corporation**
**AUMOVIO Germany GmbH**
**Taunusstraße 36**
**80807 München (DE)**

(56) References cited:
**CN-B- 107 609 460**

- **LIU YUN ET AL: "SAMNet: Stereoscopically Attentive Multi-Scale Network for Lightweight Salient Object Detection", IEEE TRANSACTIONS ON IMAGE PROCESSING, IEEE, USA, vol. 30, 18 March 2021 (2021-03-18), pages 3804 - 3814, XP011846210, ISSN: 1057-7149, [retrieved on 20210324], DOI: 10.1109/TIP.2021.3065239**
- **LIU NIAN ET AL: "PiCANet: Learning Pixel-Wise Contextual Attention for Saliency Detection", 2018 IEEE/CVF CONFERENCE ON COMPUTER VISION AND PATTERN RECOGNITION, IEEE, 18 June 2018 (2018-06-18), pages 3089 - 3098, XP033476277, DOI: 10.1109/CVPR.2018.00326**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **CHO KYUNGHYUN ET AL: "Describing Multimedia Content Using Attention-Based Encoder-Decoder Networks", IEEE TRANSACTIONS ON MULTIMEDIA, IEEE, USA, vol. 17, no. 11, 1 November 2015 (2015-11-01), pages 1875 - 1886, XP011588085, ISSN: 1520-9210, [retrieved on 20151020], DOI: 10.1109/TMM.2015.2477044**
- **KELVIN XU ET AL: "Show, Attend and Tell: Neural Image Caption Generation with Visual Attention", 19 April 2016 (2016-04-19), XP055748546, Retrieved from the Internet <URL:https://arxiv.org/pdf/1502.03044.pdf> [retrieved on 20201109]**
- **IVAN SOROKIN ET AL: "Deep Attention Recurrent Q-Network", PROCEEDINGS OF THE NIPS WORKSHOP ON DEEP REINFORCEMENT LEARNING, 5 December 2015 (2015-12-05), pages 1 - 7, XP055541449, Retrieved from the Internet <URL:https://arxiv.org/pdf/1512.01693.pdf> [retrieved on 20190114]**

## Description

### TECHNICAL FIELD

The present subject matter described herein, in general, discloses an apparatus and method for detecting an objected present within an image. In other words, the present application discloses techniques for soft attention based saliency map generation for object detection.

### BACKGROUND

There are many algorithms for object detection in an image, such as Region-based Convolutional Neural Network (R-CNN), Fast R-CNN, Faster R-CNN, YOLOv2, and Single Shot Detector (SSD) etc. These state-of-the-art algorithms search for a target object in the entire image. These algorithms are computationally inefficient and biologically implausible. This leads to lesser evaluation metric performance and also longer training duration.

In real-life, when human search for a particular object in an image, the eye makes rapid movements between the fixated points called saccades before landing on the target object. The trajectory of the eye movement differs according to the object of interest of the human observer. Each fixation point indicates regions of the image where "attention" has been paid to by the human. The human visual attention is assumed to be moving with the eye movements. However, the existing techniques tend to process the whole input frame instead of focusing/searching for the discriminative features in an input frame. Document CN 107609460 B discloses a video-based human action recognition method using dual-stream CNN+LSTM networks (spatial RGB stream + temporal optical flow stream) with softmax-based spatial and temporal attention mechanisms to weight key frames and salient regions for classification.

Document XP011846210 by Liu et al., discloses a lightweight CNN architecture for salient object detection featuring a Stereoscopically Attentive Multi-scale (SAM) module that fuses multi-scale features via combined channel-wise and spatial attention (1.33M parameters, 343 fps on GPU).

Document US 11,367,205 B1 discloses a dense multi-scale feature detection system for image matching that processes images at different scales with CNNs, applies an attention network, and fuses cross-scale features to generate robust attention maps for matching.

Thus, there exists a need of an attention-based model for localizing an object in an image.

### SUMMARY

The present disclosure overcomes one or more shortcomings of the prior art and provides additional advantages discussed throughout the present disclosure. Additional features and advantages are realized through the techniques of the present disclosure. Other embodiments and aspects of the disclosure are described in detail herein and are considered a part of the claimed disclosure.

In one non-limiting embodiment of the present disclosure a method for detecting an object present in an image, comprising:receiving (602) an input image comprising at least one object to be detected, wherein the input image is an RGB image;generating (604) a soft attention image by modifying brightness of the received input image, wherein generating the soft attention image comprises:converting the received input image into a HSV image comprising a brightness channel;multiplying the brightness channel of the HSV image by a multivariate Gaussian function, such that brightness of the HSV image is modified to be high at a centre of the multivariate Gaussian function and reduces with distance from the centre of the multivariate Gaussian function; andafter modifying the brightness of the HSV image, converting the modified HSV image into a RGB image to generate the soft attention image;processing (606) the received input image using a first Convolutional Neural Networks (CNN) model to extract a first feature map;processing (608) the soft attention image using a second CNN model to extract a second feature map;integrating (610) the first and second feature maps to generate a stacked feature map;processing (612) the stacked feature map to generate a saliency map using a deep Q-learning model (108); anddetecting (614) the at least one object based on the saliency map.

In another non-limiting embodiment, the present disclosure recites that detecting the at least one object based on the saliency map comprises detecting highest activity in the saliency map, wherein the highest activity corresponds to a location of the object.

In yet another non-limiting embodiment, the present disclosure recites that detecting the highest activity in the saliency map comprises creating a plurality of contours on the saliency map, computing density of each contour by calculating an average pixel value within the contour, wherein a contour with highest density is selected as the location of the object.

In yet another non-limiting embodiment, the present disclosure recites that the first and second feature maps are generated using one or more feature detectors using convolve operation onto the received image and soft attention image, respectively, and the first and second feature maps are collection of matrices, wherein the collection of matrices comprise

pixel values representing at least one of color, texture, shape, and brightness of the received input image and the soft-attention image.

In yet another non-limiting embodiment, the present disclosure recites that the stacked feature map comprises consolidated matrices obtained from the collection of the matrices of the first and second feature maps, wherein consolidated matrices comprise consolidated pixel values representing at least one of color, texture, shape, and brightness of both the received input image and the soft-attention image. The saliency map comprises saliency matrices obtained from the consolidated matrices, wherein the saliency matrices comprise saliency pixel values is an area, within the received input image, indicative of the at least one object to be detected in the received input image

In yet another non-limiting embodiment, the present disclosure discloses an apparatus to detect an object present in an image, comprising:an input/output (I/ O) interface (112) configured to receive an input image comprising at least one object to be detected, wherein the input image is an RGB image;a soft attention image generation unit (120) operationally coupled with the I/O interface (112), wherein the soft attention generation unit (120) is configured to generate a soft attention image by modifying brightness of the received input image, wherein to generate the soft attention image, the soft attention image generation unit (120) is configured to:convert the received input image into a HSV image comprising a brightness channel;multiply the brightness channel of the HSV image by a multivariate Gaussian function, such that brightness of the HSV image is modified to be high at a centre of the multivariate Gaussian function and reduces with distance from the centre of the multivariate Gaussian function; andafter modifying the brightness of the HSV image, convert the modified HSV image into a RGB image to generate the soft attention image;an attention search unit (102) operationally coupled with the I/O interface (112) and the soft attention image generation unit (120), wherein the attention search unit (102) is configured to:process the received input image using a first Convolutional Neural Networks (CNN) model (104) to extract a first feature map;process the soft attention image using a second CNN model (106) to extract a second feature map;integrate the first and second feature maps using an integration model (110) to generate a stacked feature map; andprocess the stacked feature map using a deep Q-learning model (108) to generate a saliency map; anda processing unit (114) operationally coupled with the I/O interface (112), the soft attention image generation unit (120), and the attention search unit (102), wherein the processing unit (114) is configured to detect the at least one object based on the saliency map.

In yet another non-limiting embodiment of the present disclosure, to detect the at least one object based on the saliency map, the processing unit is configured to detect highest activity in the saliency map, wherein the highest activity corresponds to a location of the object.

In yet another non-limiting embodiment of the present disclosure, to detect the highest activity in the saliency map, the processing unit is configured to create a plurality of contours on the saliency map and compute density of each contour by calculating an average pixel value within the contour. The contour with highest density is selected as the location of the object.

In yet another non-limiting embodiment of the present disclosure, the present application discloses that the first and second feature maps are generated using one or more feature detectors using convolve operation onto the received input image and soft attention image, respectively. The first and second feature maps are collection of matrices, wherein the collection of matrices comprise pixel values representing at least one of color, texture, shape, and brightness of the received input image and the soft-attention image.

In yet another non-limiting embodiment, the present disclosure recites that the stacked feature map comprises consolidated matrices obtained from the collection of the matrices of the first and second feature maps, wherein consolidated matrices comprise consolidated pixel values representing at least one of color, texture, shape, and brightness of both the received input image and the soft-attention image, and the saliency map comprises saliency matrices obtained from the consolidated matrices, wherein the saliency matrices comprise saliency pixel values is an area, within the received input image, indicative of the at least one object to be detected in the received input image.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE DRAWINGS

The accompanying drawings, which are incorporated in and constitute a part of this disclosure, illustrate exemplary embodiments and, together with the description, serve to explain the disclosed embodiments. In the figures, the left-most digit(s) of a reference number identifies the figure in which the reference number first appears. The same numbers are used throughout the figures to reference like features and components. Some embodiments of apparatus and/or methods in accordance with embodiments of the present subject matter are now described, by way of example only, and with reference to the accompanying figures, in which:

Fig. 1 illustrates an apparatus to detect an object present in an image, in accordance with an embodiment of the

present disclosure.

Fig. 2a-2b illustrate exemplary RGB and soft attention image respectively, in accordance with an embodiment of the present disclosure.

Fig. 3 illustrates an architecture for generating saliency map, in accordance with an embodiment of the present disclosure.

Fig. 4a-4b show performance measurement of the proposed apparatus, in accordance with an embodiment of the present subject matter.

Fig. 5a-5b show detection results of proposed apparatus and conventional technique, in accordance with an embodiment of the present subject matter.

Fig. 6 illustrates a flow chart of a method for detecting an object present in an image, in accordance with an embodiment of the present subject matter.

It should be appreciated by those skilled in the art that any block diagrams herein represent conceptual views of illustrative apparatus embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject-matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", "include(s)", or any other variations thereof, are intended to cover a non-exclusive inclusion, such that a setup, apparatus or method that comprises a list of components or steps does not include only those components or steps but may include other components or steps not expressly listed or inherent to such setup or apparatus or method. In other words, one or more elements in a device or apparatus proceeded by "comprises... a" does not, without more constraints, preclude the existence of other elements or additional elements in the device or apparatus.

In the following detailed description of the embodiments of the disclosure, reference is made to the accompanying drawings that form a part hereof, and which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present invention will be described herein below with reference to the accompanying drawings. In the following description, well known functions or constructions are not described in detail since they would obscure the description with unnecessary detail.

There are various techniques to detect an object present in an image such as Region-based Convolutional Neural Network (R-CNN), Fast R-CNN, Faster R-CNN, YOLOv2, and Single Shot Detector (SSD) etc. In R-CNN, a network takes the input of approximately 2000 object region proposals from a single image. The region proposals are generated by selective search algorithm. Each of the region proposals is scaled into the CNN input size. After scaling, each region proposal is fed into the CNN to extract features. The extracted features are then used for classification and prediction of the bounding box coordinates using linear model of Support Vector Machines and regression.

Further, in the fast R-CNN techniques, region proposals are generated from selective search algorithm as done in the R-CNN technique. These region proposals are fed into Visual Geometry Group (VGG) convolutional network. Since each pixel in the output of the CNN network corresponds to a patch (region of interest) in the input image, the region of interests in the input image (RoIs) are projected in different sizes in the 5th convolutional layer output. Each RoI is scaled into 7 x 7 square. Max pooling is done on each of these RoIs, which results in a 49-dimensional vector for RoI. Each of these 49-dimensional vectors is connected to a fully connected layer, which gives the representation of this region proposal. Fully

connected layer is passed through softmax activation to compute the probability distribution over the possible object classes. Along with this, regression layer is used to predict the new bounding box.

Further, in Faster R-CNN, region proposals are generated using CNN based approach instead of selective search algorithm. The full image is given as the input of the VGG-Net. The last layer of VGG-Net has an output of dimension (h x w x 512). A 3 x 3 kernel is applied on each of the (h x w) cells in all of the 512 feature maps, which results in a 512-dimensional vector for cell. It is assumed that the number of bounding boxes (called anchor boxes) denoted by 'k' of different sizes and aspect ratios and 512-dimensional vector for each position is given. Then the network predicts the probability that a given anchor box centered at this position contains a possible object class. Each cell in the last convolutional layer output corresponds to a patch in the original image (due to the region of influence in input of each pixel in the last convolutional layer output). Each of these anchor boxes is centered at the corresponding patch. The classifier outputs 1 for those anchor boxes which has reasonable overlap (Intersection over Union > 0.7) with the true bounding box. Similarly, regression model predicts the true bounding box from the anchor box. Once the region proposals are generated in this way, rest of the part is same as Fast R-CNN.

In YOLO (You Only Look Once) an end-to-end training deep neural network is used for object detection. The network takes full image as input and its corresponding label to predict location of an object in a new image. Before training, the label of each image is created by making (S x S) grids onto the entire image; each grid is assigned with two random bounding boxes with their coordinates and object class. If the center of the object falls into the grid, that grid is responsible to detect the object. YOLO is a real time object detector due to its fast speed.

However, all these object detection algorithms are missing the human attention mechanism to detect the object in the image and do not impart the logic of attention mechanism which is done by the human brain. Also, in these techniques, the complete network does not follow end-to-end training.

The present disclosure discloses a hybrid model for object detection while addressing the above-mentioned problem statements. The hybrid model relies on imparting attention on the crucial discriminative features in an input frame and thus not focusing on other irrelevant features in the input frame just as the human brain works. The hybrid model uses the "Attention Search" technique and primarily focuses on the mimicking the functionality of the brain by which it focuses only on certain features which matter the most in relevance to the output, and thus not focusing on the features which would not influence the output. In this manner, the hybrid model saves a large amount of computational cost by just looking at the required features for the final output. The hybrid model utilizes Temporal difference error (TDE) as the primary learning rule to provide optimal object detection. This mechanism also reduces the overall training time.

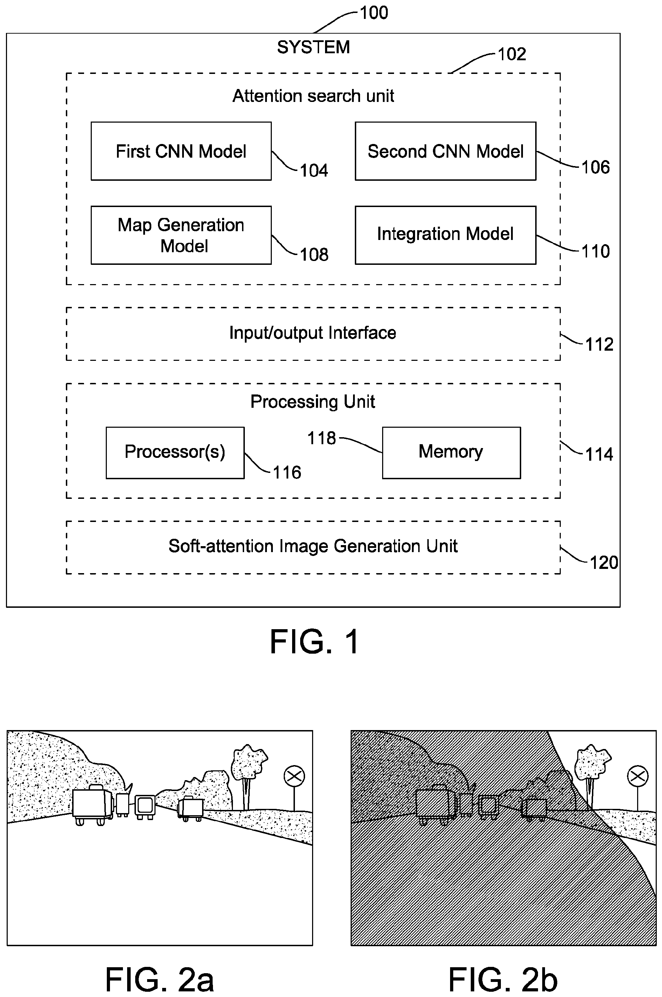

Referring to figure 1, an apparatus 100 for detecting object(s) in an image is illustrated in accordance with an embodiment of the present disclosure. In one embodiment, the apparatus 100 may include various entities such as an attention search unit 102, an input/output (I/O) interface 112, a processing unit 114, and soft-attention image generation unit 120, but not limited thereto. These entities are communicatively and operationally coupled to each other via wired or wireless network. In an embodiment, the apparatus 100 may use an attention search-based deep Q-neural network for object localization. In another embodiment, the attention search unit 102 comprises a first Convolutional Neural Networks (CNN) model 104, a second CNN model 106, a map generation model 108, and an integration model 110. In an embodiment, the CNN model 104, 106 is a type of neural network model which extract higher representations for an image content. Unlike the classical image recognition where user has to define the image features himself, the CNN takes the image's raw pixel data and extracts the features automatically. In yet another embodiment, the processing unit 114 may comprise one or more processors 116 and memory 118.

The I/O interface 112 may receive an image comprising at least one object to be detected by the apparatus 100. The received image may be stored in a database (not shown in fig. 1). In an embodiment, the image may be captured by any image capturing device which may be a part of the apparatus 100 or may be any external imaging device. The received image is a RGB image. The RGB image is also referred as a true colour image which may be stored as M*N*I data array that defines red, green, and blue colour components for each individual pixel. An exemplary RGB image is shown in fig. 2a.

The soft-attention image generation unit 120 may modify brightness of the received input image to generate a soft attention image. In an embodiment, in order to generate the soft attention image, the image generation unit 120 may convert the received RGB image into a HSV image comprising a brightness channel. The HSV stands for "Hue, Saturation, Value". The HSV is used to measure the hue angle of a color, saturation (or amount of grayness) and brightness (or value). The image generation unit 120 may modify the brightness of the HSV image by multiplying the brightness channel of the received input image by a Multivariate Gaussian $f(y, x)$ (shown in the equation below). The brightness of the HSV images is modified in such a manner that the brightness is high at a center $(y_1, x_1)$ of the Multivariate Gaussian and reduces gradually away from the center $(y_1, x_1)$. Center location is considered to be random. In an embodiment, the brightness of the received input image is modified to be high at a centre of the multivariate Gaussian function and reduces with distance from the centre of the multivariate Gaussian function. After modifying the brightness of the HSV image, the image is converted back into a RGB image, as shown in Fig. 2b. The generated RGB image is the soft attention image, which may be stored in the database.

$$f(y,x) = \frac{1}{\sigma\sqrt{2\pi}} exp(-\frac{(y-y_1)^2+(x-x_1)^2}{2\sigma^2})$$

where, x and y represents the pixel location of the gaussian matrix, and sigma represents the standard deviation or the radius of the circle.

Further, the first CNN model 104 of the attention search unit 102 takes the received image (original image) as an input and the second CNN model 106 takes the generated soft attention image as an input. The received image and the soft attention image are processed in parallel by the first and second CNN models by passing through six convolutional layers to extract features. The first CNN model 104 may process the original received image to generate a first feature map and the second CNN model 106 may process the generated soft attention image to generate a second feature map. In an embodiment, the feature maps are generated by applying filter or features detectors using convolve operation into the input images or the feature maps of prior input layers in teg CNN. The feature maps are collection of matrices, where pixel's values are calculated based on the high level understanding of the presented input images corresponding to its color, texture, object's shape, and brightness etc. The feature may comprise at least hue, saturation, brightness, and color, but not limited thereto.

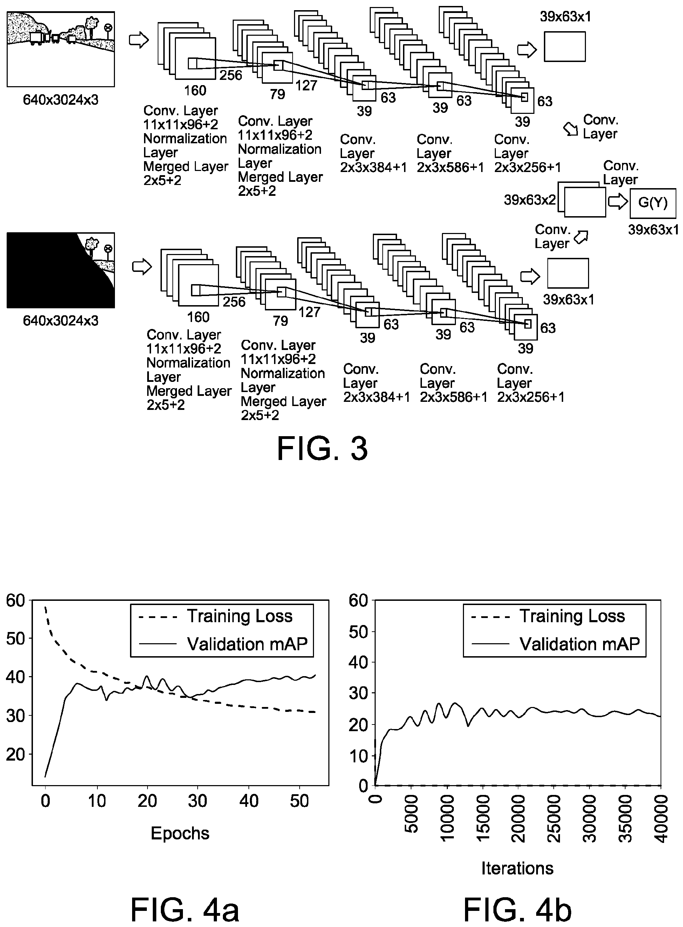

The output feature maps are passed to the integration model 110 which stacks the first and second feature maps to output a stacked feature map. In an embodiment, the integration model 110 may comprise a convolutional layer which takes both the feature maps (first and second feature) as input and outputs a stacked map of dimension 39 x 63 x 2. The stacked feature map is processed by the map generation model 108 to generate a saliency map. In an embodiment, the map generation model 108 may be a deep Q- learning model which may comprise one or more convolutional layers. The deep Q-learning model may process the stacked map to generate the saliency map of dimension 39 x 63 x 1 as shown in fig. 3. In an embodiment, the stacked feature map comprises consolidated matrices obtained from the collection of the matrices of the first and second feature maps, wherein consolidated matrices comprise consolidated pixel values representing at least one of color, texture, shape, and brightness of both the received input image and the soft-attention image. In another embodiment, the saliency map comprises saliency matrices obtained from the consolidated matrices, wherein the saliency matrices comprise saliency pixel values is an area, within the received input image, indicative of the at least one object to be detected in the received input image Fig. 3 illustrates an architecture for generating the saliency map in accordance with an embodiment of the present disclosure.

The deep Q-learning model of the apparatus 100 may be trained to generate the saliency map using deep Q-learning process. A reward matrix with dimension 640 x 1024 x 1 is created for each input image in the dataset for training. In the reward matrix, value '1' is given to the pixel coordinates where traffic sign (object) and soft attention overlap, value '0.5' is given to the pixel coordinates where only the traffic sign is present, and value '0' elsewhere. After that, the reward matrix $R_{t+1}$ is resized into 39 x 63 x 1 to match the dimension of the saliency map, which is the output from the network.

$$R_{t+1}(x,y) = \begin{cases} 1, & if\,(x,y) \in \text{GroundTruth Box \& Attention} \\ 0.5, & if\,(x,y) \in \text{GroundTruth Box Only} \\ 0, & \text{Elsewhere} \end{cases} \quad (1)$$

Here $(x, y)$ is the pixel coordinate in the input image. The model is trained on the frames of the RGB images. The dimension of both the inputs is 640 x 1024 x 3. For training the network, temporal difference error (TDE) is computed between saliency maps of two successive frames at time '*t*' and '*t* + 1' using equation-2 shown below.

$$TDE = \left(R_{t+1} + \gamma \;\; Q_{t+1} - Q_t\right) \quad (2)$$

In the above equation, 'γ' is the discount factor. The temporal difference error is added with the regularization cost using L2-norm of the weights. After that the total cost of a batch of 32 image frames is minimized by using a back-propagation algorithm with an optimizer to update the weights of the network. The hyperparameters such as learning rate, sigma, gamma, and regularization factor beta are fine-tuned to the value of 0.00015, 25, 0.4 and 0.00001 respectively to reach the best results with minimum total cost. The model is trained for 54 epochs.

During testing, a frame containing a traffic sign is provided to the apparatus. The traffic sign is the object to be detected. The apparatus outputs a saliency map of dimension 39 x 63 x 1, which is resized into the dimension of 640 x 1024 x 1 to match the height and width of the input image. The output saliency map has a value in a range from 0 to 1. The highest activity in the saliency map corresponds to the detected location of the traffic sign in the given image. Further, one or more contours are created on the saliency map. In an embodiment, OpenCV library is used to created contours on the saliency

map. The density of each contour is computed as the average pixel value within the contour. The contour with highest density is selected as the detection of the traffic sign. In an embodiment, the OpenCV basically finds the location which has pixel values close to 1 and make peaks on all such high values by collecting the pixels values around them. This way there will be multiple peaks or contours in the maps. Then average pixel value is calculated for each such contour. After calculating the average pixel value of each contour, whichever the contour has highest average pixel value that is considered to be the location of target object.

Referring again to the fig. 1, after generating the saliency map, the saliency map is processed by the processing unit 114 to detect the at least one object. In order to detect the object, the processing unit 114 may create a plurality of contours on the saliency map, and compute density of each contour by calculating an average pixel value within the contour. The contour with highest density is selected as the location of the object.

In this manner, the apparatus 100 may detect the object in the image in fast and highly accurate manner. Further, the training time of the apparatus is also reduced as compared to conventional techniques. The performance of the apparatus 100 is compared with other object detection algorithm on the same training and testing dataset.

In an embodiment, initially the centre of the multivariate Gaussian function is determined to be random, then it is determined by using a generated saliency map output. For that, the disclosed model is trained to generate the most salient region in the target object's location in the image using the given reward system. The location of that most salient region is taken as the location of the center. The value is high at center of the multivariate gaussian and the value is low at far from the center of the multivariate gaussian. After multiplying such matrix with "Value" or "Brightness" channel, this creates same biased scenario in the brightness channel. After converting back such HSV image into RGB image, center of the gaussian allows the high values at the target location and low values at the non-target location and this way soft attention version of the image frame is created. This biased nature of the soft attention input helps the model to learn the same bias nature towards the target's location and predict the high salient region at the target's location.

The apparatus disclosed in the present disclosure successfully provides a 23.52% increase in Mean Average Precision (mAP) compared to YOLOv2, a state-of-the-art object detection model. Not only does the apparatus outperform YOLOv2 by a significant margin, but the apparatus also requires considerably less time for training.

The disclosed apparatus has a mAP higher than YOLOv2 by a factor of 23.52% on testing dataset of 1,893 frames in road video containing both day and night images as shown in Table-1. The apparatus takes approximately 18 hours of training to reach a mAP of 41.53% whereas YOLOv2 requires approximately 24 hours of training to reach a mAP of 18.01% on the same testing dataset.

| )55] Model | )56] Training time | )57] mAP | )58] Time per frame |
|---|---|---|---|
| )59] YOLOv2 | )60] 24 hours | )61] 18.01 % | )62] 0.12 Sec |
| )63] Attentional Search Network | )64] 18 hours | )65] 41.53 % | )66] 0.17 Sec |

Fig. 4a and 4b show that for the disclosed apparatus as the absolute value of training loss reduces, mAP percentage on validation dataset (3,785 image frames) increases per epoch. Fig. 4a shows training loss (absolute value) and validation mAP (%) of the disclosed apparatus per epoch and Fig. 4b shows the training loss (absolute value) and validation mAP (%) of YOLOv2 per iteration are shown in blue and red color respectively.

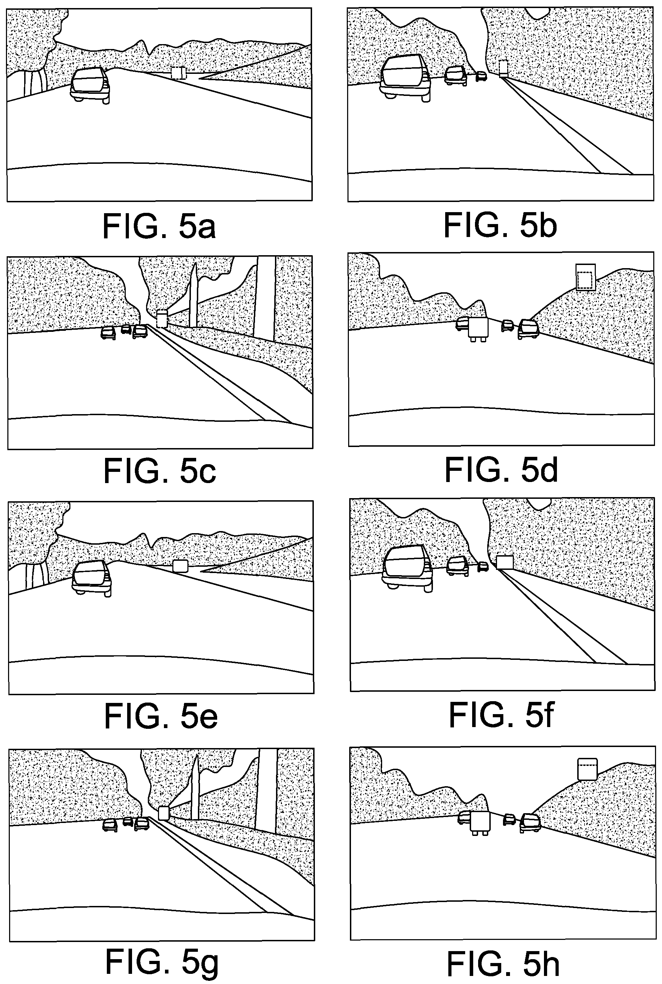

Further, the proposed apparatus not only detects the objects e.g., traffic sign boards at a very far distance, also detects these signs even when they are less visible due to bad weather conditions during the day or lights from the oncoming vehicles during the night unlike conventional techniques as shown in Fig. 5a-5c and Fig. 5e-5g. The apparatus also gives a more precise detection than conventional techniques as shown in Fig. 5d and 5h. Fig. 5a-5d shows test detection images of the disclosed apparatus 100, where red colored bounding box indicates the detection box and blue colored bounding box indicates the ground truth box of the traffic sign. The test detection images of conventional technique YOLOv2 are shown in fig. 5e-5h, where pink colored bounding box is the detection box of traffic sign and blue is the ground truth bounding box of the traffic sign.

In this manner, the proposed apparatus may detect the objects in an image in more accurate and efficient manner. Additionally, the apparatus required less time for training, which also improves the apparatus performance. Further, the apparatus can also detect the objects at a very far distance and also detect the objects even when they are less visible.

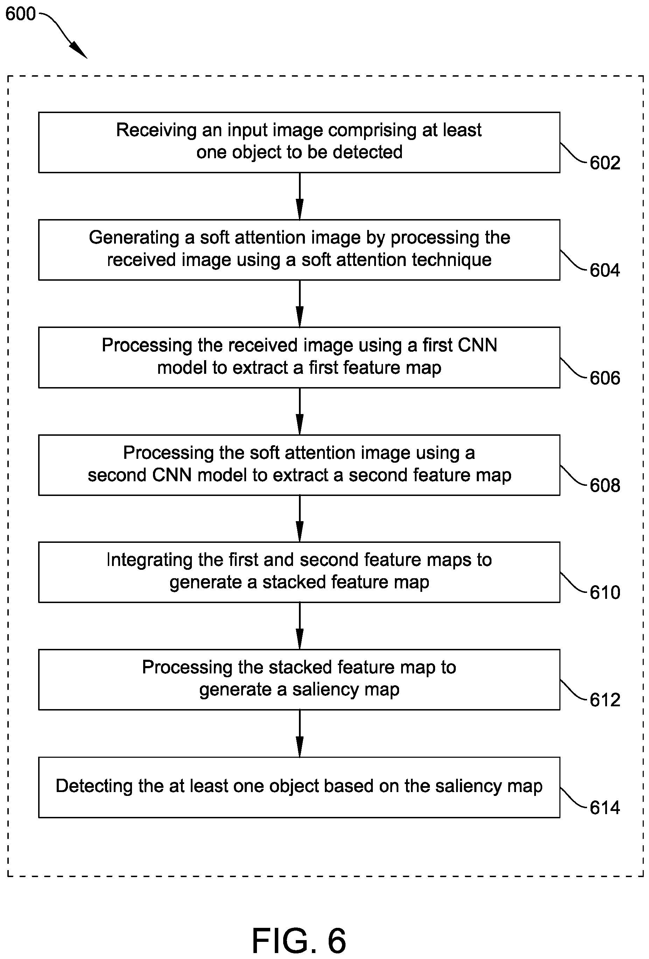

Fig. 6 illustrates a flow chart of a method 600 for detecting an object within an image in accordance with an embodiment of the present disclosure. At step 602, the method 600 recites receiving an input image comprising at least one object to be detected. In an embodiment, the image may be captured by any image capturing device which may be a part of the apparatus 100 or may be any external imaging device.

The method at step 604 recites generating a soft attention image by by modifying brightness of the received image. In an embodiment, the soft attention image may be generated by multiplying a brightness channel of the received input image by a multivariate Gaussian function, such that brightness of the received input image is modified to be high at a centre of the multivariate Gaussian function and reduces with distance from the centre of the multivariate Gaussian function. In another embodiment, the received input image may be a RGB image which may be processed to generate the soft attention image. In order to generate the soft attention image, the received RGB image may be converted into a HSV image comprising a brightness channel. The HSV stands for "Hue, Saturation, Value". The HSV is used to measure the hue angle of a color, saturation (or amount of grayness) and brightness (or value). The HSV image is further processed to modify the brightness of the HSV image by multiplying the brightness channel of the HSV image by a multivariate Gaussian function, such that brightness of the HSV image is modified to be high at a centre of the multivariate Gaussian function and reduces with distance from the centre of the multivariate Gaussian function. Further, the image is converted back into a RGB image to generate the soft attention image.

At step 606, the method 600 recites processing the received image using a first CNN model 104 to extract a first feature map. At step 608, the method recites processing the soft attention image using a second CNN model 106 to extract a second feature map. In an embodiment, the first and second feature maps are generated using one or more feature detectors or filters using convolve operation onto the received input image and the soft attention image, respectively. The extracted features maps are collection of matrices, where pixel values represent one or more of color, texture, shape, and brightness. The received image and the soft attention image are processed in parallel by the first and second CNN models by passing through six convolutional layers to extract features.

The method at step 610 recites integrating the first and second feature maps to generate a stacked feature map. In an embodiment, the first and second feature maps may be generated by the integration model 110 which comprise a convolutional layer that takes both the feature maps as input to output a stacked map of dimension 39 x 63 x 2. In an embodiment, the stacked feature map comprises consolidated matrices obtained from the collection of the matrices of the first and second feature maps, wherein consolidated matrices comprise consolidated pixel values representing at least one of color, texture, shape, and brightness of both the received input image and the soft-attention image.

At step 612, the method 600 recites processing the stacked feature map using a Deep Q-learning model to generate a saliency map. The stacked feature map may be processed by the map generation model 108 which is Deep Q-learning model. Said model may comprise one or more convolutional layers which process the stacked map to generate the saliency map of dimension 39 x 63 x 1. In an embodiment, the saliency map comprises saliency matrices obtained from the consolidated matrices, wherein the saliency matrices comprise saliency pixel values is an area, within the received input image, indicative of the at least one object to be detected in the received input image. The method further at step 614 recites detecting the object based on the saliency map. The saliency map may be processed by the processing unit 114 to detect at least one object. According to the method, detecting the at least one object based on the saliency map comprises detecting highest activity in the saliency map and the highest activity corresponds to a location of the object. In an embodiment, detecting the highest activity in the saliency map comprises creating a plurality of contours on the saliency map and computing density of each contour by calculating an average pixel value within the contour. The contour with highest density is selected as the location of the object. In an embodiment, OpenCV library is used to create contours on the saliency map. The density of each contour is computed as the average pixel value within the contour. The contour with highest density is selected as the detection of the traffic sign. In an embodiment, the OpenCV basically finds the location which has pixel values close to 1 and make peaks on all such high values by collecting the pixels values around them. This way there will be multiple peaks or contours in the maps. Then average pixel value is calculated for each such contour. After calculating the average pixel value of each contour, whichever the contour has highest average pixel value that is considered to be the location of target object.

In this manner, the method may detect the object in the image in fast and highly accurate manner. Further, the method detects the object at a very far distance and also detects the objects even when they are less visible.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Alternatives (including equivalents, extensions, variations, deviations, etc., of those described herein) will be

apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer- readable medium" should be understood to include tangible items and exclude carrier waves and transient signals, i.e., are non-transitory. Examples include random access memory (RAM), read-only memory (ROM), volatile memory, non-volatile memory, hard drives, CD ROMs, DVDs, flash drives, disks, and any other known physical storage media.

Suitable processors/controllers include, by way of example, a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

## Claims

**1.** A method for detecting an object present in an image, comprising:

receiving (602) an input image comprising at least one object to be detected, wherein the input image is an RGB image;
generating (604) a soft attention image by modifying brightness of the received input image, wherein generating the soft attention image comprises:

converting the received input image into a HSV image comprising a brightness channel;
multiplying the brightness channel of the HSV image by a multivariate Gaussian function, such that brightness of the HSV image is modified to be high at a centre of the multivariate Gaussian function and reduces with distance from the centre of the multivariate Gaussian function; and
after modifying the brightness of the HSV image, converting the modified HSV image into a RGB image to generate the soft attention image;

processing (606) the received input image using a first Convolutional Neural Networks (CNN) model to extract a first feature map;
processing (608) the soft attention image using a second CNN model to extract a second feature map;
integrating (610) the first and second feature maps to generate a stacked feature map;
processing (612) the stacked feature map to generate a saliency map using a deep Q-learning model (108); and
detecting (614) the at least one object based on the saliency map.

**2.** The method as claimed in claim 1, wherein detecting the at least one object based on the saliency map comprises: detecting highest activity in the saliency map, wherein the highest activity corresponds to a location of the object.

**3.** The method as claimed in claims 1 -2, wherein detecting the highest activity in the saliency map comprises:

creating a plurality of contours on the saliency map; and
computing density of each contour by calculating an average pixel value within the contour,
wherein a contour with highest density is selected as the location of the object in the received input image.

**4.** The method as claimed in claims 1 - 3, wherein the first and second feature maps are generated using one or more feature detectors using convolve operation onto the received input image and the soft attention image, respectively, wherein the first and second feature maps are collection of matrices, wherein the collection of matrices comprise pixel values representing at least one of color, texture, shape, and brightness of the received input image and the soft-attention image.

**5.** The method as claimed in claims 1 - 4,

wherein the stacked feature map comprises consolidated matrices obtained from the collection of the matrices of

the first and second feature maps, wherein consolidated matrices comprise consolidated pixel values representing at least one of color, texture, shape, and brightness of both the received input image and the soft-attention image, and

wherein the saliency map comprises saliency matrices obtained from the consolidated matrices, wherein the saliency matrices comprise saliency pixel values is an area, within the received input image, indicative of the at least one object to be detected in the received input image.

**6.** An apparatus to detect an object present in an image, comprising:

an input/output (I/O) interface (112) configured to receive an input image comprising at least one object to be detected, wherein the input image is an RGB image;

a soft attention image generation unit (120) operationally coupled with the I/O interface (112), wherein the soft attention generation unit (120) is configured to generate a soft attention image by modifying brightness of the received input image, wherein to generate the soft attention image, the soft attention image generation unit (120) is configured to:

convert the received input image into a HSV image comprising a brightness channel;

multiply the brightness channel of the HSV image by a multivariate Gaussian function, such that brightness of the HSV image is modified to be high at a centre of the multivariate Gaussian function and reduces with distance from the centre of the multivariate Gaussian function; and

after modifying the brightness of the HSV image, convert the modified HSV image into a RGB image to generate the soft attention image;

an attention search unit (102) operationally coupled with the I/O interface (112) and the soft attention image generation unit (120), wherein the attention search unit (102) is configured to:

process the received input image using a first Convolutional Neural Networks (CNN) model (104) to extract a first feature map;

process the soft attention image using a second CNN model (106) to extract a second feature map;

integrate the first and second feature maps using an integration model (110) to generate a stacked feature map; and

process the stacked feature map using a deep Q-learning model (108) to generate a saliency map; and

a processing unit (114) operationally coupled with the I/O interface (112), the soft attention image generation unit (120), and the attention search unit (102), wherein the processing unit (114) is configured to detect the at least one object based on the saliency map.

**7.** The apparatus as claimed in claims 6, wherein to detect the at least one object based on the saliency map, the processing unit (114) is configured to detect highest activity in the saliency map, wherein the highest activity corresponds to a location of the object.

**8.** The apparatus as claimed in claims 6-7, wherein to detect the highest activity in the saliency map, the processing unit (114) is configured to:
create a plurality of contours on the saliency map; and

compute density of each contour by calculating an average pixel value within the contour,
wherein a contour with highest density is selected as the location of the object.

**9.** The apparatus as claimed in claims 6-8, wherein the first and second feature maps are generated using one or more feature detectors using convolve operation onto the received input image and soft attention image, respectively, wherein the first and second feature maps are collection of matrices, wherein the collection of matrices comprise pixel values representing at least one of color, texture, shape, and brightness of the received input image and the soft-attention image.

**10.** The apparatus as claimed in claims 6-9,

wherein the stacked feature map comprises consolidated matrices obtained from the collection of the matrices of the first and second feature maps, wherein consolidated matrices comprise consolidated pixel values representing at least one of color, texture, shape, and brightness of both the received input image and the soft-attention

image, and
wherein the saliency map comprises saliency matrices obtained from the consolidated matrices, wherein the saliency matrices comprise saliency pixel values is an area, within the received input image, indicative of the at least one object to be detected in the received input image.

**Patentansprüche**

1. Verfahren zum Erkennen eines in einem Bild vorhandenen Objekts, umfassend:

   Empfangen (602) eines Eingabebildes, das mindestens ein zu erkennendes Objekt umfasst, wobei das Eingabebild ein RGB-Bild ist;
   Erzeugen (604) eines Bildes weicher Aufmerksamkeit durch Modifizieren der Helligkeit des empfangenen Eingabebildes, wobei Erzeugen des Bildes weicher Aufmerksamkeit umfasst:

      Umwandeln des empfangenen Eingabebildes in ein HSV-Bild, das einen Helligkeitskanal umfasst;
      Multiplizieren des Helligkeitskanals des HSV-Bildes mit einer multivariaten Gauß-Funktion, so dass die Helligkeit des HSV-Bildes dahingehend modifiziert wird, dass sie an einem Zentrum der multivariaten Gauß-Funktion hoch ist und mit dem Abstand von dem Zentrum der multivariaten Gauß-Funktion abnimmt; und nach dem Modifizieren der Helligkeit des HSV-Bildes, Umwandeln des modifizierten HSV-Bildes in ein RGB-Bild, um das Bild weicher Aufmerksamkeit zu erzeugen;
      Verarbeiten (606) des empfangenen Eingabebildes unter Verwendung eines ersten neuronale-Faltungsnetzwerke(CNN - Convolutional Neural Networks)-Modells, um eine erste Merkmalskarte zu extrahieren;
      Verarbeiten (608) des Bildes weicher Aufmerksamkeit unter Verwendung eines zweiten CNN-Modells, um eine zweite Merkmalskarte zu extrahieren;
      Integrieren (610) der ersten und der zweiten Merkmalskarte, um eine gestapelte Merkmalskarte zu erzeugen;
      Verarbeiten (612) der gestapelten Merkmalskarte, um unter Verwendung eines Deep-Q-Learning-Modells (108) eine Salienzkarte zu erzeugen; und
      Erkennen (614) des mindestens einen Objekts basierend auf der Salienzkarte.

2. Verfahren nach Anspruch 1, wobei Erkennen des mindestens einen Objekts basierend auf der Salienzkarte umfasst: Erkennen der höchsten Aktivität in der Salienzkarte, wobei die höchste Aktivität einer Position des Objekts entspricht.

3. Verfahren nach den Ansprüchen 1-2, wobei Erkennen der höchsten Aktivität in der Salienzkarte umfasst:

   Erstellen einer Vielzahl von Konturen auf der Salienzkarte; und
   Berechnen der Dichte jeder Kontur durch Berechnen eines durchschnittlichen Pixelwerts innerhalb der Kontur, wobei eine Kontur mit der höchsten Dichte als die Position des Objekts in dem empfangenen Eingabebild ausgewählt wird.

4. Verfahren nach den Ansprüchen 1-3, wobei die erste und die zweite Merkmalskarte unter Verwendung eines oder mehrerer Merkmalsdetektoren erzeugt werden, die eine Faltungsoperation auf das empfangene Eingabebild beziehungsweise das Bild weicher Aufmerksamkeit anwenden,
   wobei die erste und die zweite Merkmalskarte eine Sammlung von Matrizen sind, wobei die Sammlung von Matrizen Pixelwerte umfasst, die mindestens eines von Farbe, Textur, Form und Helligkeit des empfangenen Eingabebildes und des Bildes weicher Aufmerksamkeit repräsentieren.

5. Verfahren nach den Ansprüchen 1-4,
   wobei die gestapelte Merkmalskarte konsolidierte Matrizen umfasst, die aus der Sammlung der Matrizen der ersten und der zweiten Merkmalskarte erhalten werden, wobei die konsolidierten Matrizen konsolidierte Pixelwerte umfassen, die mindestens eines von Farbe, Textur, Form und Helligkeit sowohl des empfangenen Eingabebildes als auch des Bildes weicher Aufmerksamkeit repräsentieren, und wobei die Salienzkarte Salienzmatrizen umfasst, die aus den konsolidierten Matrizen erhalten werden, wobei die Salienzmatrizen Salienzpixelwerte umfassen, die ein Bereich innerhalb des empfangenen Eingabebildes sind, der für das mindestens eine in dem empfangenen Eingabebild zu erkennende Objekt indikativ ist.

6. Einrichtung zum Erkennen eines in einem Bild vorhandenen Objekts, umfassend:

eine Eingabe/Ausgabe(E/A)-Schnittstelle (112), die konfiguriert ist, um ein Eingabebild zu empfangen, das mindestens ein zu erkennendes Objekt umfasst, wobei das Eingabebild ein RGB-Bild ist;
eine Erzeugungseinheit (120) für Bilder weicher Aufmerksamkeit, die operativ mit der E/A-Schnittstelle (112) gekoppelt ist, wobei die Erzeugungseinheit (120) für weiche Aufmerksamkeit konfiguriert ist, um ein Bild weicher Aufmerksamkeit durch Modifizieren der Helligkeit des empfangenen Eingabebildes zu erzeugen, wobei die Erzeugungseinheit (120) für Bilder weicher Aufmerksamkeit zum Erzeugen des Bildes weicher Aufmerksamkeit konfiguriert ist, um:

das empfangene Eingabebild in ein HSV-Bild umzuwandeln, das einen Helligkeitskanal umfasst;
den Helligkeitskanal des HSV-Bildes mit einer multivariaten Gauß-Funktion zu multiplizieren, so dass die Helligkeit des HSV-Bildes dahingehend modifiziert wird, dass sie an einem Zentrum der multivariaten Gauß-Funktion hoch ist und mit dem Abstand von dem Zentrum der multivariaten Gauß-Funktion abnimmt; und
nach dem Modifizieren der Helligkeit des HSV-Bildes das modifizierte HSV-Bild in ein RGB-Bild umzuwandeln, um das Bild weicher Aufmerksamkeit zu erzeugen;
eine Aufmerksamkeitssucheinheit (102), die operativ mit der E/A-Schnittstelle (112) und der Erzeugungseinheit (120) für Bilder weicher Aufmerksamkeit gekoppelt ist,
wobei die Aufmerksamkeitssucheinheit (102) konfiguriert ist, um:

das empfangene Eingabebild unter Verwendung eines ersten neuronale-Faltungsnetzwerke(CNN)-Modells (104) zu verarbeiten, um eine erste Merkmalskarte zu extrahieren;
das Bild weicher Aufmerksamkeit unter Verwendung eines zweiten CNN-Modells (106) zu verarbeiten, um eine zweite Merkmalskarte zu extrahieren;
die erste und die zweite Merkmalskarte unter Verwendung eines Integrationsmodells (110) zu integrieren, um eine gestapelte Merkmalskarte zu erzeugen; und
die gestapelte Merkmalskarte unter Verwendung eines Deep-Q-Learning-Modells (108) zu verarbeiten, um eine Salienzkarte zu erzeugen; und
eine Verarbeitungseinheit (114), die operativ mit der E/A-Schnittstelle (112), der Erzeugungseinheit (120) für Bilder weicher Aufmerksamkeit und der Aufmerksamkeitssucheinheit (102) gekoppelt ist, wobei die Verarbeitungseinheit (114) konfiguriert ist, um das mindestens eine Objekt basierend auf der Salienzkarte zu erkennen.

**7.** Einrichtung nach Anspruch 6, wobei die Verarbeitungseinheit (114) zum Erkennen des mindestens einen Objekts basierend auf der Salienzkarte konfiguriert ist, die höchste Aktivität in der Salienzkarte zu erkennen, wobei die höchste Aktivität einer Position des Objekts entspricht.

**8.** Einrichtung nach den Ansprüchen 6-7, wobei die Verarbeitungseinheit (114) zum Erkennen der höchsten Aktivität in der Salienzkarte konfiguriert ist, um:

eine Vielzahl von Konturen auf der Salienzkarte zu erstellen; und
die Dichte jeder Kontur durch Berechnen eines durchschnittlichen Pixelwerts innerhalb der Kontur zu berechnen, wobei eine Kontur mit der höchsten Dichte als die Position des Objekts ausgewählt wird.

**9.** Einrichtung nach den Ansprüchen 6-8, wobei die erste und die zweite Merkmalskarte unter Verwendung eines oder mehrerer Merkmalsdetektoren erzeugt werden, die eine Faltungsoperation auf das empfangene Eingabebild beziehungsweise das Bild weicher Aufmerksamkeit anwenden,
wobei die erste und die zweite Merkmalskarte eine Sammlung von Matrizen sind, wobei die Sammlung von Matrizen Pixelwerte umfasst, die mindestens eines von Farbe, Textur, Form und Helligkeit des empfangenen Eingabebildes und des Bildes weicher Aufmerksamkeit repräsentieren.

**10.** Einrichtung nach den Ansprüchen 6-9,
wobei die gestapelte Merkmalskarte konsolidierte Matrizen umfasst, die aus der Sammlung der Matrizen der ersten und der zweiten Merkmalskarte erhalten werden, wobei die konsolidierten Matrizen konsolidierte Pixelwerte umfassen, die mindestens eines von Farbe, Textur, Form und Helligkeit sowohl des empfangenen Eingabebildes als auch des Bildes weicher Aufmerksamkeit repräsentieren, und wobei die Salienzkarte Salienzmatrizen umfasst, die aus den konsolidierten Matrizen erhalten werden, wobei die Salienzmatrizen Salienzpixelwerte umfassen, die ein Bereich innerhalb des empfangenen Eingabebildes sind, der für das mindestens eine in dem empfangenen Eingabebild zu erkennende Objekt indikativ ist.

## Revendications

1. Procédé de détection d'un objet présent dans une image, comprenant :

    la réception (602) d'une image d'entrée comprenant au moins un objet à détecter, dans lequel l'image d'entrée est une image RGB ;
    la génération (604) d'une image d'attention douce par modification de la luminosité de l'image d'entrée reçue, dans lequel la génération de l'image d'attention douce comprend :

        la conversion de l'image d'entrée reçue en une image HSV comprenant un canal de luminosité ;
        la multiplication du canal de luminosité de l'image HSV par une fonction gaussienne multivariée, de sorte que la luminosité de l'image HSV est modifiée pour être élevée au centre de la fonction gaussienne multivariée et diminue avec la distance par rapport au centre de la fonction gaussienne multivariée ; et
        après avoir modifié la luminosité de l'image HSV, la conversion de l'image HSV modifiée en une image RGB pour générer l'image d'attention douce ;
        le traitement (606) de l'image d'entrée reçue en utilisant un premier modèle de réseau neuronal convolutif (CNN) pour extraire une première carte de caractéristiques ;
        le traitement (608) de l'image d'attention douce en utilisant un second modèle CNN pour extraire une seconde carte de caractéristiques ;
        l'intégration (610) des première et seconde cartes de caractéristiques pour générer une carte de caractéristiques empilée ;
        le traitement (612) de la carte de caractéristiques empilée pour générer une carte de saillance en utilisant un modèle d'apprentissage Q profond (108) ; et
        la détection (614) de l'au moins un objet sur la base de la carte de saillance.

2. Procédé selon la revendication 1, dans lequel la détection de l'au moins un objet sur la base de la carte de saillance comprend :
la détection de l'activité la plus élevée sur la carte de saillance, dans lequel l'activité la plus élevée correspond à un emplacement de l'objet.

3. Procédé selon les revendications 1 et 2, dans lequel la détection de l'activité la plus élevée sur la carte de saillance comprend :

    la création d'une pluralité de contours sur la carte de saillance ; et
    le calcul de la densité de chaque contour en calculant une valeur moyenne de pixel à l'intérieur du contour, dans lequel un contour avec la densité maximale est sélectionné comme emplacement de l'objet dans l'image d'entrée reçue.

4. Procédé selon les revendications 1 à 3, dans lequel les première et seconde cartes de caractéristiques sont générées à l'aide d'un ou plusieurs détecteurs de caractéristiques utilisant une opération de convolution sur l'image d'entrée reçue et l'image d'attention douce, respectivement,
dans lequel les première et seconde cartes de caractéristiques sont des collections de matrices, dans lequel la collection de matrices comprend des valeurs de pixels représentant au moins l'une des caractéristiques suivantes : couleur, texture, forme et luminosité de l'image d'entrée reçue et de l'image d'attention douce.

5. Procédé selon les revendications 1 à 4,

    dans lequel la carte de caractéristiques empilée comprend des matrices consolidées obtenues à partir de la collection des matrices des première et seconde cartes de caractéristiques, dans lequel les matrices consolidées comprennent des valeurs de pixels consolidées représentant au moins l'une des caractéristiques suivantes : couleur, texture, forme et luminosité, à la fois de l'image d'entrée reçue et de l'image d'attention douce, et
    dans lequel la carte de saillance comprend des matrices de saillance obtenues à partir des matrices consolidées, dans lequel les matrices de saillance comprennent des valeurs de pixels de saillance dans une zone, dans l'image d'entrée reçue, indicative de l'au moins un objet à détecter dans l'image d'entrée reçue.

6. Appareil pour détecter un objet présent dans une image, comprenant :

    une interface d'entrée/sortie (E/S) (112) configurée pour recevoir une image d'entrée comprenant au moins un

objet à détecter, dans lequel l'image d'entrée est une image RGB ;
une unité de génération d'image d'attention douce (120) couplée fonctionnellement à l'interface d'E/S (112), dans lequel l'unité de génération d'image d'attention douce (120) est configurée pour générer une image d'attention douce en modifiant la luminosité de l'image d'entrée reçue, dans lequel, afin de générer l'image d'attention douce, l'unité de génération d'image d'attention douce (120) est configurée pour :

convertir l'image d'entrée reçue en une image HSV comprenant un canal de luminosité ;
multiplier le canal de luminosité de l'image HSV par une fonction gaussienne multivariée, de sorte que la luminosité de l'image HSV est modifiée pour être élevée au centre de la fonction gaussienne multivariée et diminue avec la distance par rapport au centre de la fonction gaussienne multivariée ; et
après avoir modifié la luminosité de l'image HSV, convertir l'image HSV modifiée en une image RGB pour générer l'image d'attention douce ;
une unité de recherche d'attention (102) couplée fonctionnellement à l'interface d'E/S (112) et à l'unité de génération d'image d'attention douce (120), dans lequel l'unité de recherche d'attention (102) est configurée pour :

traiter l'image d'entrée reçue en utilisant un premier modèle de réseau neuronal convolutif (CNN) (104) pour extraire une première carte de caractéristiques ;
traiter l'image d'attention douce en utilisant un second modèle CNN (106) pour extraire une seconde carte de caractéristiques ;
intégrer les première et seconde cartes de caractéristiques en utilisant un modèle d'intégration (110) pour générer une carte de caractéristiques empilée ; et
traiter la carte de caractéristiques empilée en utilisant un modèle d'apprentissage Q profond (108) pour générer une carte de saillance ; et
une unité de traitement (114) couplée fonctionnellement à l'interface E/S (112), à l'unité de génération d'image d'attention douce (120) et à l'unité de recherche d'attention (102), dans lequel l'unité de traitement (114) est configurée pour détecter l'au moins un objet sur la base de la carte de saillance.

**7.** Appareil selon la revendication 6, dans lequel, pour détecter l'au moins un objet sur la base de la carte de saillance, l'unité de traitement (114) est configurée pour détecter l'activité la plus élevée sur la carte de saillance, dans lequel l'activité la plus élevée correspond à un emplacement de l'objet.

**8.** Appareil selon les revendications 6 et 7, dans lequel, pour détecter l'activité la plus élevée sur la carte de saillance, l'unité de traitement (114) est configurée pour:

créer une pluralité de contours sur la carte de saillance ; et
calculer la densité de chaque contour en calculant une valeur moyenne de pixel à l'intérieur du contour, dans lequel un contour avec la densité maximale est sélectionné comme emplacement de l'objet.

**9.** Appareil selon les revendications 6 à 8, dans lequel les première et seconde cartes de caractéristiques sont générées à l'aide d'un ou plusieurs détecteurs de caractéristiques utilisant une opération de convolution sur l'image d'entrée reçue et l'image d'attention douce, respectivement,
dans lequel les première et seconde cartes de caractéristiques sont des collections de matrices, dans lequel la collection de matrices comprend des valeurs de pixels représentant au moins l'une des caractéristiques suivantes : couleur, texture, forme et luminosité de l'image d'entrée reçue et de l'image d'attention douce.

**10.** Appareil selon les revendications 6 à 9,

dans lequel la carte de caractéristiques empilée comprend des matrices consolidées obtenues à partir de la collection des matrices des première et seconde cartes de caractéristiques, dans lequel les matrices consolidées comprennent des valeurs de pixels consolidées représentant au moins l'une des caractéristiques suivantes : couleur, texture, forme et luminosité, à la fois de l'image d'entrée reçue et de l'image d'attention douce, et
dans lequel la carte de saillance comprend des matrices de saillance obtenues à partir des matrices consolidées, dans lequel les matrices de saillance comprennent des valeurs de pixels de saillance dans une zone, dans l'image d'entrée reçue, indicative de l'au moins un objet à détecter dans l'image d'entrée reçue.

100

SYSTEM

102

Attention search unit

First CNN Model 104

Second CNN Model 106

Map Generation Model 108

Integration Model 110

Input/output Interface 112

Processing Unit 114

Processor(s) 116

118 Memory

Soft-attention Image Generation Unit 120

FIG. 1

FIG. 2a

FIG. 2b

640x3024x3
160
256
79
127
39
63
39
63
39
63
39x63x1
Conv. Layer 11x11x96+2 Normalization Layer Merged Layer 2x5+2
Conv. Layer 11x11x96+2 Normalization Layer Merged Layer 2x5+2
Conv. Layer 2x3x384+1
Conv. Layer 2x3x586+1
Conv. Layer 2x3x256+1
Conv. Layer
Conv. Layer
39x63x2
G(Y)
39x63x1
Conv. Layer
640x3024x3
160
256
79
127
39
63
39
63
39
63
39x63x1
Conv. Layer 11x11x96+2 Normalization Layer Merged Layer 2x5+2
Conv. Layer 11x11x96+2 Normalization Layer Merged Layer 2x5+2
Conv. Layer 2x3x384+1
Conv. Layer 2x3x586+1
Conv. Layer 2x3x256+1

FIG. 3

Training Loss
Validation mAP
60
50
40
30
20
0
10
20
30
40
50
Epochs
Training Loss
Validation mAP
60
50
40
30
20
10
0
0
5000
10000
15000
20000
25000
30000
35000
40000
Iterations

FIG. 4a

FIG. 4b

FIG. 5a

FIG. 5b

FIG. 5c

FIG. 5d

FIG. 5e

FIG. 5f

FIG. 5g

FIG. 5h

600
Receiving an input image comprising at least one object to be detected
602
Generating a soft attention image by processing the received image using a soft attention technique
604
Processing the received image using a first CNN model to extract a first feature map
606
Processing the soft attention image using a second CNN model to extract a second feature map
608
Integrating the first and second feature maps to generate a stacked feature map
610
Processing the stacked feature map to generate a saliency map
612
Detecting the at least one object based on the saliency map
614

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 107609460 B
- US 11367205 B1

### Non-patent literature cited in the description

- **LIU**. *XP011846210*